# EUROPÄISCHE PATENTSCHRIFT

(11) **EP 1 324 962 B1**
(45) Veröffentlichungstag und Bekanntmachung des Hinweises auf die Patenterteilung: **11.04.2007**
(21) Anmeldenummer: 01960597.1
(22) Anmeldetag: 31.07.2001
(51) Int. Cl.: C04B 35/634, C04B 35/486, A61K 6/027

(54) **VERFAHREN ZUR HERSTELLUNG EINES ZAHNERSATZES ODER EINER ZAHNFÜLLUNG**
METHOD FOR PRODUCING A DENTAL RESTORATION OR A DENTAL FILLING
PROCEDE DE PRODUCTION D'UNE PROTHESE DENTAIRE OU D'UNE OBTURATION DENTAIRE

(30) Priorität: 08.09.2000 DE 10044605
(43) Veröffentlichungstag der Anmeldung: 09.07.2003
(73) Patentinhaber: Forschungszentrum Karlsruhe GmbH, 76133 Karlsruhe (DE)
(72) Erfinder: BINDER, Joachim, 76344 Eggenstein-Leopoldshafen (DE); HAUSSELT, Jürgen, 76726 Germersheim (DE); RITZHAUPT-KLEISSL, Hans-Joachim, 69190 Walldorf (DE); HONNEF, Kirsten, 79110 Freiburg (DE); RAY, Sikha, 76131 Karlsruhe (DE); HENNIGE, Volker, 46282 Dorsten (DE)
(86) Internationale Anmeldenummer: PCT/EP2001/008837
(87) Internationale Veröffentlichungsnummer: WO 2002/020425

(56) Entgegenhaltungen:
- DE-A- 4 407 760
- DE-C- 19 547 129
- PATENT ABSTRACTS OF JAPAN vol. 014, no. 184 (C-0709), 13. April 1990 (1990-04-13) & JP 02 030656 A (KAWASAKI REFRACT CO LTD), 1. Februar 1990 (1990-02-01)

## Beschreibung

Die Erfindung betrifft ein Verfahren zur Herstellung eines Zahnersatzes oder einer Zahnfüllung gemäß dem ersten Patentanspruch und Verwendung einer Formmasse gemäß dem Anspruch 5.

Eine Mischung und ein Verfahren zur Herstellung von schrumpffreien Keramiken sind aus der DE 195 47 129 C1 bekannt. Die hier beschriebene Mischung besteht aus einer pulverförmigen Oxidkeramik, einer pulverförmigen intermetallischen Verbindung und einem siliciumorganischen Polymer. Aus dieser Mischung läßt sich ein Grünkörper formen, der in einer oxidierenden Atmosphäre schrumpffrei gesintert werden kann.

Aufgabe der Erfindung ist, die bekannte Mischung so abzuwandeln, daß sie sich besser als Formmasse, insbesondere als Niederdruck-Spritzgießmasse, einsetzen läßt. Außerdem soll ein weiteres Verfahren zur Herstellung eines schrumpffreien Sinterkörpers und eine Verwendungsmöglichkeit für die Formmasse vorgeschlagen werden.

Erfindungsgemäß wird das in der eingangs zitierten DE 195 47 129 C1 vorgeschlagene siliciumorganische Polymer ganz oder teilweise durch ein Wachs, vorzugsweise ein Paraffin, ersetzt. Dabei kann zwar, wie bei der bekannten Mischung, eine Oxidkeramik als dritte Komponente neben der intermetallischen Verbindung und dem Wachs vorhanden sein; oxidkeramische Sinterkörper lassen sich jedoch auch ausgehend von der intermetallischen Verbindung allein mit dem Wachs herstellen.

Die Definition von Wachsen findet sich in der Compact Disc: Römpp Chemie Lexikon - Version 1.0, Stuttgart/New York, Georg Thieme Verlag 1995. Grundsätzlich eignen sich alle unter diese Definition fallenden und hier aufgezählten Wachse zur Herstellung der Formmassen; besonders geeignet sind jedoch Paraffine.

Soll die Formmasse zu einer Oxidkeramik mit hoher Festigkeit gesintert werden, ist eine hohe Sinterdichte, vorzugsweise eine Dichte von mehr als 95 % der theoretisch erreichbaren Dichte, erforderlich. Hierfür müssen zwei Voraussetzungen erfüllt sein:
(i) Hoher Füllstoffgehalt in der Formmasse.
   Dies wird erreicht durch eine bevorzugte Oberflächenmodifikation der intermetallischen Phase, insbesondere durch eine Umhüllung mit einem Silan.
(ii) Hohe Sinterdichte.
   Eine hohe Sinterdichte kann durch Zugabe von Sinterhilfsmitteln, z. B. anorganische Alkali- oder Erdalkaliverbindungen wie Li₂O erreicht werden.

Die Zusammensetzung der Formmasse, d. h. die Anteile an intermetallischer Phase, Wachs und ggf. der Oxidkeramik werden gemäß der eingangs zitierten DE 195 47 129 C1 so gewählt, daß der Sinterschrumpf des in einer oxidierenden Atmosphäre zu einer Oxidkeramik gesinterten Körpers entweder minimiert oder auf einen vorgegebenen Wert eingestellt werden kann. Somit lassen sich aus der Formmasse schrumpffreie Sinterkörper oder solche mit einem vorgewählten Schrumpf herstellen.

Die Formmasse weist gegenüber der aus der eingangs zitierten DE 195 47 129 C1 den wesentlichen Vorteil auf, daß Wachse, insbesondere Paraffine, erheblich billiger sind als siliciumorganische Polymere. Daneben ergeben sich weitere vorteilhafte Eigenschaften:
- die Möglichkeit, auf die Oxidkeramik ganz zu verzichten,
- eine verbesserte Handhabbarkeit,
- eine niedrigere Verarbeitungstemperatur (von Raumtemperatur bis ca. 80°C),
- hoher Füllgrad an intermetallischer Phase,
- lösungsmittelfrei gieß- oder spritzbar,
- in einem Abdruckverfahren einsetzbar zur Herstellung detailgenauer Replikate.

Mit der Formmasse lassen sich somit durch Spritzgießen, insbesondere durch Niederdruck-Spritzgießen oder Heißgießen, durch plastische Abformung oder durch Replikations-, Wachsabdruck- oder andere bekannte Modellierungsverfahren Grünkörper besonders hoher Qualität herstellen, die durch die bekannte Mischung und das bekannte Verfahren nicht erhältlich sind.

Beim erfindungsgemäßen Verfahren kann nach der Herstellung des Grünkörpers etwa bei Temperaturen von 40°C bis 200°C das Wachs ausgeschmolzen werden, wobei das ausfließende flüssige Wachs aufgefangen und bei Bedarf erneut eingesetzt werden kann. Durch den hohen Füllstoffgehalt, der z. B. durch die Silanisierung der intermetallischen Phase erreicht werden kann, ergibt sich eine besonders enge Verzahnung der Pulverpartikel miteinander, die bewirkt, daß der entwachste Grünkörper formgetreu erhalten bleibt.

Nach dem Entwachsungsprozeß werden die Grünlinge in einer oxidierenden (sauerstoffhaltigen) Atmosphäre in an sich bekannter Weise schrumpffrei zu dem Zahnersatz oder der Zahnfüllung gesintert. Die maximalen Sintertemperaturen bei der Aufheizung in der oxidierenden Atmosphäre können dabei zwischen 1000°C und 1650°C liegen.

Wegen der hohen Formtreue, die mit der Formmasse und dem Verfahren erreichbar sind, eignet sich die Formmasse insbesondere zum Einsatz im Dentalbereich, d. h. für feststehenden Zahnersatz und keramische Zahnfüllungen.

Die Erfindung wird im folgenden anhand von zwei Ausführungsbeispielen näher erläutert. In beiden Fällen werden keramische Bauteile erhalten, deren Dimension sich praktisch nicht vom Grünkörper unterscheidet und die somit schrumpffrei sintern.

### Beispiel 1

75,42 g Zirconiumsilicid werden 2 Stunden lang in Ethanol attritiert. Anschließend werden 74,58 g tetragonal stabilisiertes Zirkoniumdioxid zugefügt und die Mischung eine weitere Stunde im Attritor mischgemahlen. Die Pulvermischung wird im Vakuum getrocknet und anschließend bei 120°C 2 Stunden lang im Trockenschrank belassen.

9,666 g Paraffin ung 1,568 g PEG(2)stearylether (PEG: Polyethylenglycol) werden bei 80°C aufgeschmolzen. In diese Wachsmischung werden 100 g der vorbereiteten Pulvermischung eingerührt und für weitere 3 Stunden bei 90°C homogenisiert.

Die entstehende Masse läßt sich bei 120°C leicht in Silikonformen blasenfrei abformen. Die entformten Grünlinge werden bei 500°C rißfrei entbindert und die so entstandenen Braunlinge bei 1550°C zum fertigen Bauteil dichtgesintert.

### Beispiel 2

Die wie in Beispiel 1 vorbereitete Pulvermischung wird vor der Verarbeitung zur Heißgießmasse vorbehandelt.

Dazu werden 285 ml Ethanol mit 15 ml entionisiertem Wasser und 3 ml Essigsäure versetzt und gerührt. Anschließend werden 5,59 g n-Octyltriethoxysilan zugegeben. In die klare Lösung werden 100 g der wie in Beispiel 1 vorbereiteten Pulvermischung eingerührt und 30 Minuten in Suspension gehalten. Anschließend wird das Pulver wiederum im Vakuum getrocknet und bei 120°C für 2 Stunden im Trockenschrank belassen. Es folgt die Weiterverarbeitung zur heißgießfähigen Formmasse wie in Beispiel 1 beschrieben.

## Patentansprüche

1. Verfahren zur Herstellung eines Zahnersatzes oder einer Zahnfüllung mit den Schritten:
a) aus einer pulverförmigen intermetallischen Verbindung und einem Wachs wird eine homogene Mischung hergestellt,
b) aus der homogenen Mischung wird ein Grünkörper geformt,
c) der Grünkörper wird entwachst und
d) unter einer oxidierenden Atmosphäre zu dem Zahnersatz oder der Zahnfüllung gesintert.

2. Verfahren nach Anspruch 1, bei dem der homogenen Mischung eine Oxidkeramik als zusätzliche Komponente beigemischt wird.

3. Verfahren nach Anspruch 1 oder 2, bei dem Li₂O als Sinterhilfe eingesetzt wird.

4. Verfahren nach Anspruch 1, 2 oder 3, bei dem die intermetallische Verbindung oberflächlich mit einem Silan überzogen ist.

5. Verwendung einer Formmasse mit
a) einer intermetallischen Verbindung und
b) einem Wachs
zur Herstellung eines Zahnersatzes oder einer Zahnfüllung.

## Claims

1. Method of producing a denture or a dental filling by the following steps:
a) a homogeneous mixture is produced from a pulverulent intermetallic compound and a wax,
b) a green body is moulded from the homogeneous mixture,
c) the green body is dewaxed, and
d) the green body is sintered in an oxidising atmosphere to form the denture or the dental filling.

2. Method according to claim 1, wherein an oxide ceramic is admixed to the homogeneous mixture as an additional component.

3. Method according to claim 1 or 2, wherein Li₂O is used as the sintering aid.

4. Method according to claim 1, 2 or 3, wherein the intermetallic compound is coated on its surface with a silane.

5. Use of a moulding composition having
a) an intermetallic compound and
b) a wax
to produce a denture or a dental filling.

## Revendications

1. Procédé de production d'une prothèse dentaire ou d'un remplissage dentaire, comprenant les étapes consistant à :
a) à partir d'un composé intermétallique sous forme de poudre et d'une cire, produire un mélange homogène ;
b) mouler un corps cru à partir du mélange homogène,
c) décirer le corps cru et
d) le fritter sous atmosphère oxydante pour obtenir la prothèse dentaire ou le remplissage dentaire.

2. Procédé selon la revendication 1,
**caractérisé en ce que**
comme composant supplémentaire au mélange homogène on ajoute une céramique oxydée.

3. Procédé selon la revendication 1 ou 2,
**caractérisé en ce que**
Li₂O est utilisé comme auxiliaire de frittage.

4. Procédé selon la revendication 1, 2 ou 3,
**caractérisé en ce que**
le composé intermétallique est recouvert d'un silane en surface.

5. Utilisation d'une matière à mouler avec
a) un composé intermétallique et
b) une cire
pour la production d'une prothèse dentaire ou d'un remplissage dentaire.
